# EUROPEAN PATENT APPLICATION

(11) **EP 4 847 977 A1**
(43) Date of publication of application: **02.12.2026**
(21) Application number: 24919831.8
(22) Date of filing: 30.10.2024
(51) Int. Cl.: G02B 6/10, G02B 27/01, G02B 5/18

(54) **METHOD FOR MANUFACTURING OPTICAL WAVEGUIDE STRUCTURE, OPTICAL WAVEGUIDE STRUCTURE, AND DISPLAY DEVICE**

(30) Priority: 23.01.2024 CN 202410093799
(71) Applicant: Beijing Zitiao Network Technology Co., Ltd., Beijing 100190 (CN)
(72) Inventor: TAN, Wei, Beijing 100028 (CN); XIONG, Wen, Beijing 100028 (CN)
(74) Representative: Marks & Clerk LLP
(86) International application number: PCT/CN2024/128577
(87) International publication number: WO 2025/156751

(57) **Abstract**

The present application discloses a method for manufacturing an optical waveguide structure, an optical waveguide structure, and a display device. The method for manufacturing an optical waveguide structure includes: providing a first waveguide layer and a second waveguide layer, the first waveguide layer having a refractive index greater than a refractive index of the second waveguide layer; bonding the first waveguide layer to the second waveguide layer; and forming a grating layer on a side of the first waveguide layer away from the second waveguide layer.

## Description

### CROSS-REFERENCE TO RELATED APPLICATIONS

The present application is based on and claims priority to Chinese Application No. 202410093799.7, filed on January 23, 2024, the disclosure of which is incorporated herein by reference in its entirety.

### TECHNICAL FIELD

The present application relates to the technical field of display, and in particular, to a method for manufacturing an optical waveguide structure, an optical waveguide structure, and a display device.

### BACKGROUND

Augmented Reality (AR) technology is a technology that combines virtual information with the real world, the optical display technique thereof mainly include array waveguide schemes, volume holography schemes, birdbath schemes, free-form surface schemes, etc. A diffractive waveguide scheme based on surface relief has become one of the mainstream optical display schemes thanks to its advantages such as compact size, light weight, high transmittance, and easy adaptability to the required forms of display devices, such as glasses. An optical waveguide structure is an essential component in the diffractive waveguide scheme.

### SUMMARY

The present application is intended to solve at least one of the technical problems existing in the related art. Accordingly, the present application proposes a method for manufacturing an optical waveguide structure, an optical waveguide structure, and a display device.

In a first aspect, the present application provides a method for manufacturing an optical waveguide structure, the method including:
providing a first waveguide layer and a second waveguide layer, the first waveguide layer having a refractive index greater than a refractive index of the second waveguide layer;
bonding the first waveguide layer to the second waveguide layer; and
forming a grating layer on a side of the first waveguide layer away from the second waveguide layer.

According to an embodiment of the present application, the bonding the first waveguide layer to the second waveguide layer includes:
performing hydrophilic treatment on the first waveguide layer and the second waveguide layer to pre-bond the first waveguide layer to the second waveguide layer; and
performing high-temperature annealing on the pre-bonded first waveguide layer and second waveguide layer to achieve stable bonding between the first waveguide layer and the second waveguide layer.

According to an embodiment of the present application, the first waveguide layer and the second waveguide layer each includes at least one of glass and resin.

According to an embodiment of the present application, the refractive index of the first waveguide layer ranges from 1.7 to 2.1, and the refractive index of the second waveguide layer ranges from 1.4 to 1.8.

According to an embodiment of the present application, the second waveguide layer has a thickness less than a thickness of the first waveguide layer.

According to an embodiment of the present application, bonding the first waveguide layer to the second waveguide layer includes:
forming a bonding layer on a side of the first second waveguide layer and/or the second waveguide layer; and
bonding the first waveguide layer to the second waveguide layer via the bonding layer.

According to an embodiment of the present application, the bonding layer includes at least one of oxide of silicon and nitride of silicon.

According to an embodiment of the present application, before forming the grating layer on the side of the first waveguide layer away from the second waveguide layer, the method further includes:
providing a third waveguide layer, the third waveguide layer having a refractive index less than the refractive index of the second waveguide layer; and
bonding the third waveguide layer to a side of the second waveguide layer away from the first waveguide layer.

According to an embodiment of the present application, the forming the grating layer on the side of the first waveguide layer away from the second waveguide layer includes:
forming a grating material layer on the side of the first waveguide layer away from the second waveguide layer; and
treating the grating material layer by using a nanoimprint lithography process or an etching process to obtain the grating layer.

According to an embodiment of the present application, the method further includes:
forming an optical functional layer on a side of the grating layer away from the first waveguide layer.

In a second aspect, the present application provides an optical waveguide structure, including:
a first waveguide layer;
a second waveguide layer bonded to the first waveguide layer, the first waveguide layer having a refractive index greater than a refractive index of the second waveguide layer; and
a grating layer located on a side of the first waveguide layer away from the second waveguide layer.

According to an embodiment of the present application, the first waveguide layer and the second waveguide layer each include at least one of glass and resin.

According to an embodiment of the present application, the refractive index of the first waveguide layer ranges from 1.7 to 2.1, and the refractive index of the second waveguide layer ranges from 1.4 to 1.8.

According to an embodiment of the present application, the second waveguide layer has a thickness less than a thickness of the first waveguide layer.

According to an embodiment of the present application, the optical waveguide structure further includes a bonding layer,
where the bonding layer is located between the first waveguide layer and the second waveguide layer, and the first waveguide structure is bonded to the second waveguide structure via the bonding layer.

According to an embodiment of the present application, the bonding layer includes at least one of oxide of silicon and nitride of silicon.

According to an embodiment of the present application, the optical waveguide structure further includes a third waveguide layer,
where the third waveguide layer is bonded to a side of the second waveguide layer away from the first waveguide layer, and the third waveguide layer has a refractive index less than the refractive index of the second waveguide layer.

According to an embodiment of the present application, the optical waveguide structure further includes an optical functional layer,
where the optical functional layer is located on a side of the grating layer away from the first waveguide layer.

In a third aspect, the present application provides a display device including the optical waveguide structure as described above.

Additional aspects and advantages of the present application will be set forth in part in the following description, and in part will become apparent from the following description or may be learned by practice of the present application.

### BRIEF DESCRIPTION OF THE DRAWINGS

The above and/or additional aspects and advantages of the present application will become apparent and easy to understand from the following description of embodiments with reference to the accompanying drawings, in which:
FIG. 1 is a schematic flowchart of a method for manufacturing an optical waveguide structure according to an embodiment of the present application;
FIG. 2 is a first schematic diagram of bonding between a first waveguide layer and a second waveguide layer in a method for manufacturing an optical waveguide structure according to an embodiment of the present application;
FIG. 3 is a second schematic diagram of bonding between a first waveguide layer and a second waveguide layer in a method for manufacturing an optical waveguide structure according to an embodiment of the present application;
FIG. 4 is a third schematic diagram of bonding between a first waveguide layer and a second waveguide layer in a method for manufacturing an optical waveguide structure according to an embodiment of the present application;
FIG. 5 is a first schematic structural diagram for a method for manufacturing an optical waveguide structure according to an embodiment of the present application;
FIG. 6 is a second schematic structural diagram for a method for manufacturing an optical waveguide structure according to an embodiment of the present application;
FIG. 7 is a third schematic structural diagram for a method for manufacturing an optical waveguide structure according to an embodiment of the present application;
FIG. 8 is a fourth schematic structural diagram for a method for manufacturing an optical waveguide structure according to an embodiment of the present application;
FIG. 9 is a first schematic structural diagram of an optical waveguide structure according to an embodiment of the present application;
FIG. 10 is a fifth schematic structural diagram for a method for manufacturing an optical waveguide structure according to an embodiment of the present application;
FIG. 11 is a sixth schematic structural diagram for a method for manufacturing an optical waveguide structure according to an embodiment of the present application;
FIG. 12 is a second schematic structural diagram of an optical waveguide structure according to an embodiment of the present application;
FIG. 13 is a third schematic structural diagram of an optical waveguide structure according to an embodiment of the present application;
FIG. 14 is a schematic diagram of an optical waveguide structure in the related art; and
FIG. 15 is a schematic diagram of an optical waveguide structure according to an embodiment of the present application.

### DETAILED DESCRIPTION

Embodiments of the present application will be described in detail below. Examples of the embodiments are shown in the accompanying drawings, and throughout the drawings, the same or similar reference signs refer to the same or similar elements or elements having the same or similar functions. The embodiments described below with reference to the accompanying drawings are exemplary and are intended to be illustrative of the present application, but should not be construed as limiting the present application.

A method for manufacturing an optical waveguide structure, an optical waveguide structure, and a display device according to the embodiments of the present application will be described below with reference to the drawings.

Augmented Reality (AR) technology is a technology that integrates virtual information with the real world, the optical display techniques thereof mainly include array waveguide schemes, volume holography schemes, birdbath schemes, free-form surface schemes, etc. A diffractive waveguide scheme based on surface relief has become one of the mainstream optical display schemes due to its advantage such as compact size, light weight, high transmittance, and easy adaptability to the required forms of display devices, such as glasses. The optical waveguide structure is an essential component in the diffractive waveguide scheme.

To reduce the thickness and weight of the diffractive waveguide, a single-layer diffractive waveguide structure is employed. However, for a single-layer diffractive waveguide structure, red, green, and blue (RGB) lights of different wavelength bands have different propagation paths and exit pupil densities within the waveguide, resulting in color non-uniformity at different positions within an eyebox.

In view of this, the present application proposes an improved method for manufacturing an optical waveguide structure, an optical waveguide structure, and a display device, where while the thickness and weight of the optical waveguide structure can be reduced, the color uniformity of the waveguide can be improved, and the yield of the optical waveguide structure can be improved.

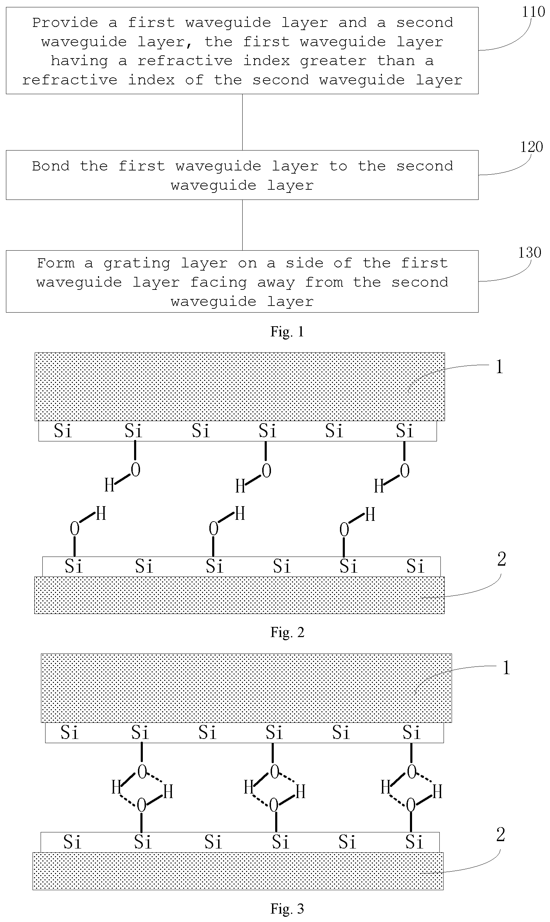

FIG. 1 is a schematic flowchart of a method for manufacturing an optical waveguide structure according to an embodiment of the present application.

As shown in FIG. 1, the method for manufacturing an optical waveguide structure according to the embodiment of the present application includes steps 110 to 130.

At step 110, a first waveguide layer and a second waveguide layer are provided, the first waveguide layer having a refractive index greater than a refractive index of the second waveguide layer.

Referring to FIGs. 2 to 5, a first waveguide layer 1 and a second waveguide layer 2 are provided, the first waveguide layer 1 having a refractive index greater than a refractive index of the second waveguide layer 2.

In some embodiments, the refractive index of the first waveguide layer 1 ranges from 1.7 to 2.1, and the refractive index of the second waveguide layer 2 ranges from 1.4 to 1.8.

A material of the first waveguide layer 1 may be the same as or different from that of the second waveguide layer 2.

In some embodiments, the first waveguide layer 1 and the second waveguide layer 2 each include at least one of glass and resin. When the material of the first waveguide layer 1 and/or the second waveguide layer 2 is glass, the rigidity of the optical waveguide structure can be increased, thereby improving the reliability of the optical waveguide structure. When the material of the first waveguide layer 1 and/or the second waveguide layer 2 is resin, the weight of the optical waveguide structure can be reduced, which contributes to lighting and thinning of the optical waveguide structure.

The thickness of the second waveguide layer 2 may be less than the thickness of the first waveguide layer 1, to prevent the configuration of the second waveguide layer 2 from excessively affecting the thickness and weight of the optical waveguide structure.

In some embodiments, the first waveguide layer 1 has a thickness ranging from 0.3 mm to 3 mm, and the second waveguide layer 2 has a thickness ranging from 0.2 mm to 1 mm.

The second waveguide layer 2 has the same size as the first waveguide layer 1. For example, the sizes of the first waveguide layer 1 and the second waveguide layer 2 may each be any one of 4 inches, 6 inches, 8 inches, and 12 inches.

At step 120, the first waveguide layer is bonded to the second waveguide layer.

Referring to FIGs. 2 to 5, the first waveguide layer 1 is bonded to the second waveguide layer 2 using a bonding process. The bonding process may be a fusion bonding (FB) process or a hybrid bonding (HB) process, which is not specifically limited herein.

In some embodiments, bonding the first waveguide layer to the second waveguide layer in step 120 includes:
performing hydrophilic treatment on the first waveguide layer and the second waveguide layer to pre-bond the first waveguide layer to the second waveguide layer; and
performing high-temperature annealing on the pre-bonded first waveguide layer and second waveguide layer to achieve stable bonding between the first waveguide layer and the second waveguide layer.

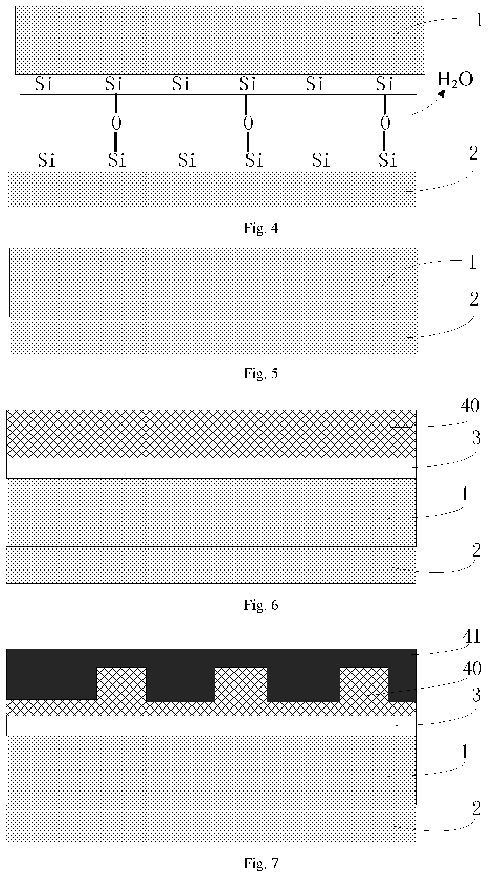

As shown in FIG. 2, hydrophilic treatment is first performed on the first waveguide layer 1 and the second waveguide layer 2 to introduce a large number of hydrophilic groups (-OH), thereby forming silanol bonds (Si-OH) on surfaces of the first waveguide layer 1 and the second waveguide layer 2. At room temperature, as shown in FIG. 3, pre-bonding is done relying on the -OH and H bonds on the surfaces of the first waveguide layer 1 and the second waveguide layer 2. Then, as shown in FIG. 4, through a high-temperature annealing process, a polymerization reaction occurs between the silanol bonds (Si-OH) on the surfaces of the first waveguide layer 1 and the second waveguide layer 2, generating water (H₂O) and siloxane bonds (Si-O-Si), thereby achieving stable bonding between the first waveguide layer 1 and the second waveguide layer 2, as shown in FIG. 5. The high-temperature annealing process may be performed at a temperature ranging from 400°C to 1000°C.

At step 130, a grating layer is formed on a side of the first waveguide layer away from the second waveguide layer.

In some embodiments, forming the grating layer on the side of the first waveguide layer away from the second waveguide layer in step 130 includes:
forming a grating material layer on the side of the first waveguide layer away from the second waveguide layer; and
treating, using a nanoimprint lithography process or an etching process, the grating material layer to obtain the grating layer.

As shown in FIG. 6, before forming the grating material layer, an adhesive layer 3 may be first formed on a side of the first waveguide layer 1 away from the second waveguide layer 2. The adhesive layer 3 may be coated on a surface on the side of the first waveguide layer 1 away from the second waveguide layer 2. A coating process may include a spin coating process, an ink-jet printing (IJP) process, a slit coating process, etc. A thickness of the adhesive layer 3 may be less than or equal to 1 nm.

Then, a grating material layer 40 is formed on a side of the adhesive layer 3 away from the first waveguide layer 1. The grating material layer 40 may cover a surface on the side of the adhesive layer 3 away from the first waveguide layer 1. The grating material layer 40 is treated to form a grating layer 4 on the side of the adhesive layer 3 away from the first waveguide layer 1, thereby forming the optical waveguide structure. The process for treating the grating material layer 40 may be a nanoimprint lithography process, an etching process, or any other process, which is not specifically limited herein.

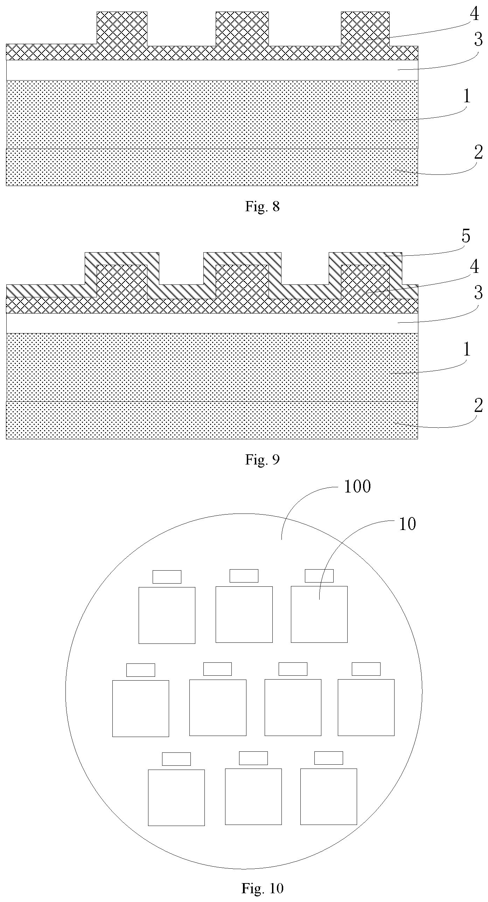

For example, the grating material layer 40 may be an imprint material layer. The thickness of the imprint material layer may range from 50 nm to 5000 nm. As shown in FIG. 7, a mold 41 is provided on a side of the grating material layer 40 away from the first waveguide layer 1, and the grating material layer 40 is subjected to imprinting via the mold 41, exposure, demolding and other processes to obtain the grating layer 4, as shown in FIG. 8. The imprinting process may include a roll-to-plate imprinting process, a plate-to-plate imprinting process, etc. The ultraviolet exposure wavelength may be 365 nm.

For example, the grating material layer 40 may be an inorganic film layer. The grating material layer 40 is etched by using an etching process to form the grating layer 4. The etching process may include an inductively coupled plasma (ICP) etching process, a reactive ion beam etching (RIBE) process, etc.

Alternatively, the grating material layer 40 is subjected to exposure, development, etching, cleaning and other processes by using a semiconductor process flow to obtain the grating layer 4.

In some embodiments, the refractive index of the grating layer 4 is consistent with that of the first waveguide layer 1. The material of the grating layer 4 may include titanium oxide, silicon nitride, zirconium oxide, or hafnium oxide.

The optical waveguide structure is mainly classified into a one-dimensional architecture and a two-dimensional architecture. For an optical waveguide structure of the one-dimensional architecture, the grating layer 4 may include an in-coupling grating and a turning and out-coupling grating. For an optical waveguide structure of the two-dimensional architecture, the grating layer 4 includes an in-coupling grating and an out-coupling grating.

The basic principle of the optical waveguide structure is that the in-coupling grating 1 couples light from an external optical engine into the waveguide layer, where the light propagates forward within the waveguide layer via total internal reflection, and is then coupled out via the turning and out-coupling grating (or the out-coupling grating) after pupil expansion, so as to integrate external ambient light with virtual information before reaching human eyes, thereby achieving an augmented display effect.

In the related art, to reduce the weight and thickness of the optical waveguide structure and to improve the color uniformity of the waveguide, the first waveguide layer and the second waveguide layer are laminated using a lamination process, such as laminating the first waveguide layer and the second waveguide layer by using an adhesive. However, various issues may arise during the lamination process, such as poor total thickness variation (TTV), bubble formation, and low alignment accuracy between the first waveguide layer and the second waveguide layer, which may result in a decline in the modulation transfer function (MTF), a reduction in waveguide clarity, and a decline in overall yield for the laminated waveguide.

In embodiments of the present application, the first waveguide layer 1 is bonded to the second waveguide layer 2 using a bonding process, thereby avoiding the problems of bubble formation, poor TTV, declined MTF, and the like caused by the lamination process, and effectively increasing the yield of the optical waveguide structure. Furthermore, the first waveguide layer 1 has a refractive index greater than a refractive index of the second waveguide layer 2, increasing the propagation distances and exit pupil densities of the red, green, and blue lights within the waveguide, thereby improving the color uniformity of the waveguide. In addition, the first waveguide layer 1 and the grating layer 4 are designed as a single-layer optical waveguide structure to reduce the thickness and weight of the optical waveguide structure, while the second waveguide layer 2 is relatively thin and does not significantly affect the thickness and weight of the optical waveguide structure.

In some embodiments, the method for manufacturing an optical waveguide structure further includes:
forming an optical functional layer on a side of the grating layer away from the first waveguide layer.

As shown in FIG. 9, according to the actual requirements of the optical waveguide structure, an optical functional layer 5 may be deposited on a side of the grating layer 4 away from the first waveguide layer 1. The deposition process may include evaporation, atomic layer deposition (ALD), plasma enhanced chemical vapor deposition (PECVD), thermal field enhanced chemical vapor deposition (TFECVD), physical vapor deposition (PVD), etc.

The optical functional layer 5 may include a reflective layer or other film layers, which are not specifically limited herein. The thickness of the optical functional layer 5 may range from 20 nm to 500 nm.

In some embodiments, the material of the optical functional layer 5 may include at least one of TiO₂, Al, Si₃N₄, HfO₂, or the like.

It shall be noted that the optical waveguide structure in the present embodiment may be a waveguide plate or a waveguide wafer.

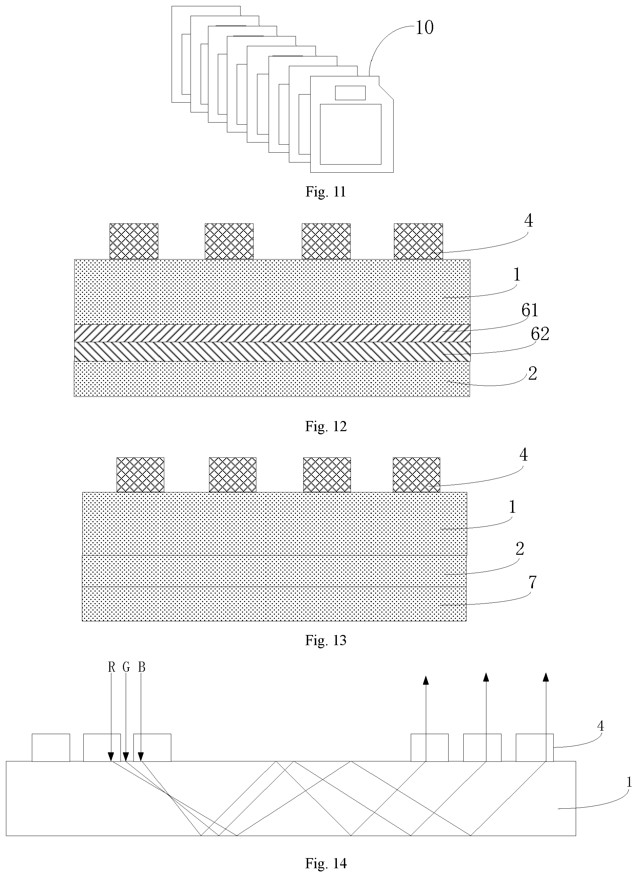

When the optical waveguide structure is a waveguide wafer, as shown in FIG. 10, the waveguide wafer 100 includes a plurality of waveguide plates 10. The waveguide plates 10 of the waveguide wafer 100 are shaped by using a cutting process, to obtain the plurality of waveguide plates 10, as shown in FIG. 11. The cutting process may include a picosecond laser cutting process, a CO₂ laser cleaving process, or a computer numerical control (CNC) process. After the waveguide plates 10 are obtained by cutting, the waveguide plates 10 may also be subjected to post-processing steps such as waveguide lamination and black coating, which are not specifically limited herein.

In some embodiments, bonding the first waveguide layer to the second waveguide layer in step 120 includes:
forming a bonding layer on a side of the first second waveguide layer and/or the second waveguide layer; and
bonding the first waveguide layer to the second waveguide layer via the bonding layer.

Before bonding the first waveguide layer 1 to the second waveguide layer 2, a bonding layer may be formed on a side of the first waveguide layer 1 and/or the second waveguide layer 2, such that the first waveguide layer 1 can be bonded to the second waveguide layer 2 via the bonding layer, thereby improving the effect of bonding the first waveguide layer 1 and the second waveguide layer 2.

In some embodiments, the material of the bonding layer includes at least one of oxide of silicon, nitride of silicon, or the like, such as silicon monoxide, silicon dioxide, and silicon nitride, etc.

As shown in FIG. 12, the first waveguide layer 1 and the second waveguide layer 2 are first provided. Then, a first bonding layer 61 is formed on aside of the first waveguide layer 1, and a second bonding layer 62 is formed on a side of the second waveguide layer 2. The first waveguide layer 1 is bonded to the second waveguide layer 2 via the first bonding layer 61 and the second bonding layer 62.

The step of bonding the first waveguide layer 1 to the second waveguide layer 2 via the first bonding layer 61 and the second bonding layer 62 may include the following. First, hydrophilic treatment is performed on the first bonding layer 61 and the second bonding layer 62, so as to pre-bond the first waveguide layer 1 to the second waveguide layer 2 via the first bonding layer 61 and the second bonding layer 62. Then, high-temperature annealing is performed on the pre-bonded first waveguide layer 1 and second waveguide layer 2, so as to achieve stable bonding between the first waveguide layer 1 and the second waveguide layer 2 via the first bonding layer 61 and the second bonding layer 62.

After bonding the first waveguide layer 1 to the second waveguide layer 2, a grating layer 4 is formed on a side of the first waveguide layer 1 away from the second waveguide layer 2.

In some embodiments, before forming the grating layer on the side of the first waveguide layer away from the second waveguide layer, the method further includes:
providing a third waveguide layer, the third waveguide layer having a refractive index less than the refractive index of the second waveguide layer; and
bonding the third waveguide layer to a side of the second waveguide layer away from the first waveguide layer.

As shown in FIG. 13, the first waveguide layer 1 and the second waveguide layer 2 are first provided, and then the first waveguide layer 1 is bonded to the second waveguide layer 2. A third waveguide layer 7 is provided, where the third waveguide layer 7 has a refractive index less than the refractive index of the second waveguide layer 2, that is, the refractive indices of the first waveguide layer 1, the second waveguide layer 2, and the third waveguide layer 7 gradually decrease. Then, the third waveguide layer 7 is bonded to the side of the second waveguide layer 2 away from the first waveguide layer 1. The bonding process may include a fusion bonding process, a hybrid bonding process, or the like.

In some embodiments, before bonding the third waveguide layer 7 to the side of the second waveguide layer 2 away from the first waveguide layer 1, a bonding layer may be formed on a side of the third waveguide layer 7 and/or on the side of the second waveguide layer 2 away from the first waveguide layer 1, so as to bond the third waveguide layer 7 to the side of the second waveguide layer 2 away from the first waveguide layer 1 via the bonding layer, thereby improving the effect of bonding the third waveguide layer 7 and the second waveguide layer 2.

In some embodiments, the material of the third waveguide layer 7 may include at least one of glass and resin. The material of the third waveguide layer 7 may be the same as or different from those of the first waveguide layer 1 and the second waveguide layer 2.

After bonding the third waveguide layer 7 to the second waveguide layer 2, a grating layer 4 is formed on a side of the first waveguide layer 1 away from the second waveguide layer 2.

It shall be noted that additional waveguide layers may be formed in the optical waveguide structure, for example, before forming the grating layer 4 on the side of the first waveguide layer 1 away from the second waveguide layer 2, a fourth waveguide layer may be further bonded to a side of the third waveguide layer 7 away from the second waveguide layer 2, where the fourth waveguide layer has a refractive index less than the refractive index of the third waveguide layer 7. The number of waveguide layers in the optical waveguide structure may be set according to actual requirements, which is not specifically limited herein.

In the related art, the optical waveguide structure includes a first waveguide layer 1 and a grating layer 4 located on a side of the first waveguide layer 1, as shown in FIG. 14. Red, green, and blue (RGB) lights of different wavelength bands have different propagation paths and exit pupil densities within the waveguide, resulting in color non-uniformity at different positions within the eyebox.

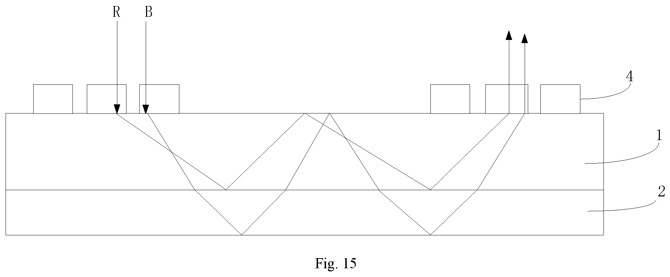

In the present application, the first waveguide layer 1 and the second waveguide layer 2 are provided, the first waveguide layer 1 having a refractive index greater than a refractive index of the second waveguide layer 2, the first waveguide layer 1 is bonded to the second waveguide layer 2, and the grating layer 4 is formed on a side of the first waveguide layer 1 away from the second waveguide layer 2, thereby forming a single-layer optical waveguide structure, which reduces the thickness and weight of the optical waveguide structure, and by providing waveguide layers having different refractive indices, the propagation distances and exit pupil densities of red, green, and blue lights within the waveguide are improved (as shown in FIG. 15, red light R propagates in the first waveguide layer 1, while blue light B propagates in the first waveguide layer 1 and the second waveguide layer 2), thereby improving the color uniformity of the waveguide. Furthermore, the waveguide layers are bonded using a bonding process, thereby increasing the yield of the optical waveguide structure.

Accordingly, the embodiments of the present application further provide an optical waveguide structure that can be formed by the method for manufacturing an optical waveguide structure in the embodiments as described above.

As shown in FIG. 9, the optical waveguide structure according to the embodiments of the present application includes a first waveguide layer 1, a second waveguide layer 2, and a grating layer 4. The first waveguide layer 1 is bonded to the second waveguide layer 2, and the first waveguide layer 1 has a refractive index greater than a refractive index of the second waveguide layer 2. The grating layer 4 is located on a side of the first waveguide layer away from the second waveguide layer 2.

In some embodiments, the refractive index of the first waveguide layer 1 ranges from 1.7 to 2.1, and the refractive index of the second waveguide layer 2 ranges from 1.4 to 1.8.

A material of the first waveguide layer 1 may be the same as or different from that of the second waveguide layer 2.

In some embodiments, the first waveguide layer 1 and the second waveguide layer 2 each includes at least one of glass and resin. When the material of the first waveguide layer 1 and/or the second waveguide layer 2 is glass, the rigidity of the optical waveguide structure can be increased, thereby improving the reliability of the optical waveguide structure. When the material of the first waveguide layer 1 and/or the second waveguide layer 2 is resin, the weight of the optical waveguide structure can be reduced, which contributes to lighting and thinning of the optical waveguide structure.

The thickness of the second waveguide layer 2 may be less than the thickness of the first waveguide layer 1, so as to prevent the configuration of the second waveguide layer 2 from excessively affecting the thickness and weight of the optical waveguide structure.

In some embodiments, the first waveguide layer 1 has a thickness ranging from 0.3 mm to 3 mm, and the second waveguide layer 2 has a thickness ranging from 0.2 mm to 1 mm.

The second waveguide layer 2 has the same size as the first waveguide layer 1. For example, the sizes of the first waveguide layer 1 and the second waveguide layer 2 may each comprise any one of 4 inch, 6 inch, 8 inch, and 12 inch, or the like.

In some embodiments, the refractive index of the grating layer 4 is consistent with that of the first waveguide layer 1. The material of the grating layer 4 may include titanium oxide, silicon nitride, zirconium oxide, or hafnium oxide.

The optical waveguide structure may be mainly classified into a one-dimensional architecture and a two-dimensional architecture. For an optical waveguide structure of a one-dimensional architecture, the grating layer 4 may include an in-coupling grating and a turning and out-coupling grating. For an optical waveguide structure of a two-dimensional architecture, the grating layer 4 may include an in-coupling grating and an out-coupling grating.

The basic principle of the optical waveguide structure is that the in-coupling grating 1 couples light from an external optical engine into the waveguide layer, where the light propagates forward within the waveguide layer via total internal reflection, and is then coupled out via the turning and out-coupling grating (or the out-coupling grating) after pupil expansion, so as to integrate external ambient light with virtual information before reaching human eyes, thereby achieving an augmented display effect.

In some embodiments, as shown in FIG. 9, the optical waveguide structure may further include an adhesive layer 3. The adhesive layer 3 is located between the first waveguide layer 1 and the grating layer 4, such that the first waveguide layer 1 is bonded to the grating layer 4 via the adhesive layer 3.

In some embodiments, as shown in FIG. 9, the optical waveguide structure may further include an optical functional layer 5. The optical functional layer 5 is located on a side of the grating layer 4 away from the first waveguide layer 1.

The optical functional layer 5 may include a reflective layer or other film layers, which are not specifically limited herein. The thickness of the optical functional layer 5 may range from 20 nm to 500 nm.

In some embodiments, the material of the optical functional layer 5 may include at least one of TiO₂, Al, Si₃N₄, HfO₂, or the like.

In some embodiments, the optical waveguide structure may further include a bonding layer. The bonding layer is located between the first waveguide layer 1 and the second waveguide layer 2, and the first waveguide layer 1 is bonded to the second waveguide layer 2 via the bonding layer.

As shown in FIG. 12, the optical waveguide structure may further include a first bonding layer 61 and a second bonding layer 62. The first bonding layer 61 is located on a side of the first waveguide layer 1 close to the second waveguide layer 2, while the second bonding layer 62 is located between the first bonding layer 61 and the second waveguide layer 2, the first waveguide layer 1 is bonded to the second waveguide layer 2 via the first bonding layer 61 and the second bonding layer 62.

In some embodiments, the material of the bonding layer includes at least one of oxide of silicon, nitride of silicon, or the like, such as silicon monoxide, silicon dioxide, and silicon nitride. The material of the first bonding layer 61 may be the same as or different from that of the second bonding layer 62.

In some embodiments, as shown in FIG. 13, the optical waveguide structure may further include a third waveguide layer 7, where the third waveguide layer 7 has a refractive index less than the refractive index of the second waveguide layer 2, that is, the refractive indices of the first waveguide layer 1, the second waveguide layer 2, and the third waveguide layer 7 gradually decrease. The third waveguide layer 7 is located on a side of the second waveguide layer 2 away from the first waveguide layer 1.

In some embodiments, the material of the third waveguide layer 7 may include at least one of glass and resin. The material of the third waveguide layer 7 may be the same as or different from those of the first waveguide layer 1 and the second waveguide layer 2.

It is to be noted that the number of waveguide layers in the optical waveguide structure may be set according to actual requirements, for example, the optical waveguide structure may further include a fourth waveguide layer, the fourth waveguide layer having a refractive index less than the refractive index of the third waveguide layer 7, and the fourth waveguide layer being located on the side of the third waveguide layer 7 away from the second waveguide layer 2.

In the optical waveguide structure of the present application, a first waveguide layer, a second waveguide layer, and a grating layer are provided, the first waveguide layer having a refractive index greater than a refractive index of the second waveguide layer, the first waveguide layer is bonded to the second waveguide layer, and the grating layer is located on a side of the first waveguide layer away from the second waveguide layer, thereby forming a single-layer optical waveguide structure, which reduces the thickness and weight of the optical waveguide structure, and by providing waveguide layers having different refractive indices, the propagation distances and exit pupil densities of red, green, and blue lights within the waveguide are improved, thereby improving the color uniformity of the waveguide, and the first waveguide layer is bonded to the second waveguide layer, thereby increasing the yield of the optical waveguide structure.

Accordingly, the embodiments of the present application further provide a display device including the optical waveguide structure in the embodiments described above, which is not described in detail herein.

In the display device according to the embodiments of the present application, a first waveguide layer, a second waveguide layer, and a grating layer are provided, the first waveguide layer having a refractive index greater than a refractive index of the second waveguide layer, the first waveguide layer is bonded to the second waveguide layer, and the grating layer is located on a side of the first waveguide layer away from the second waveguide layer, thereby forming a single-layer optical waveguide structure, which reduces the thickness and weight of the optical waveguide structure, and by providing waveguide layers having different refractive indices, the propagation distances and exit pupil densities of red, green, and blue lights within the waveguide are improved, improving the color uniformity of the waveguide and thus improving the display effect of the display device, and the first waveguide layer is bonded to the second waveguide layer, thereby increasing the yield of the optical waveguide structure.

The display device according to the embodiments of the present application may be an AR display device, a product or component having an AR display function, such as AR glasses or an AR helmet.

In the specification and claims of the present application, the terms "first", "second", and so on are intended to distinguish between similar objects but do not necessarily indicate a specific order or sequence. It should be understood that the data used in this way may be interchanged where appropriate, so that the embodiments of the present application can be implemented in an order other than those illustrated or described herein, and that the objects distinguished by "first," "second," etc. are generally of one class. The number of objects is not limited, for example, the first object may be one or more.

In the description of the present application, the meaning of "a plurality of" is two or more.

In the description of this specification, descriptions with reference to the terms such as "an embodiment", "some embodiments", "illustrative embodiments", "example", "specific example", or "some examples" mean that specific features, structures, materials, or characteristics described with reference to the embodiments or examples are included in at least one embodiment or example of the present application. In this specification, the illustrative expressions of the above terms do not necessarily refer to the same embodiment or example. Moreover, the specific features, structures, materials or characteristics described can be combined in any one or more embodiments or examples in any suitable manner.

Although the embodiments of the present application have been shown and described, those of ordinary skill in the art can understand that various changes, modifications, substitutions, and variations can be made to these embodiments without departing from the principles and spirit of the present application. The scope of the present application is defined by the claims and equivalents thereof.

## Claims

1. A method for manufacturing an optical waveguide structure, comprising:
providing a first waveguide layer and a second waveguide layer, the first waveguide layer having a refractive index greater than a refractive index of the second waveguide layer;
bonding the first waveguide layer to the second waveguide layer; and
forming a grating layer on a side of the first waveguide layer away from the second waveguide layer.

2. The method for manufacturing an optical waveguide structure of claim 1, wherein the bonding the first waveguide layer to the second waveguide layer comprises:
performing hydrophilic treatment on the first waveguide layer and the second waveguide layer to pre-bond the first waveguide layer to the second waveguide layer; and
performing high-temperature annealing on the pre-bonded first waveguide layer and second waveguide layer to achieve stable bonding between the first waveguide layer and the second waveguide layer.

3. The method for manufacturing an optical waveguide structure of claim 1, wherein the first waveguide layer and the second waveguide layer each comprises at least one of glass and resin.

4. The method for manufacturing an optical waveguide structure of claim 1, wherein the refractive index of the first waveguide layer ranges from 1.7 to 2.1, and the refractive index of the second waveguide layer ranges from 1.4 to 1.8.

5. The method for manufacturing an optical waveguide structure of claim 1, wherein the second waveguide layer has a thickness less than a thickness of the first waveguide layer.

6. The method for manufacturing an optical waveguide structure of claim 1, wherein the bonding the first waveguide layer to the second waveguide layer comprises:
forming a bonding layer on a side of the first second waveguide layer and/or the second waveguide layer; and
bonding the first waveguide layer to the second waveguide layer via the bonding layer.

7. The method for manufacturing an optical waveguide structure of claim 6, wherein the bonding layer comprises at least one of oxide of silicon and nitride of silicon.

8. The method for manufacturing an optical waveguide structure of claim 1, wherein before forming the grating layer on the side of the first waveguide layer away from the second waveguide layer, the method further comprises:
providing a third waveguide layer, the third waveguide layer having a refractive index less than the refractive index of the second waveguide layer; and
bonding the third waveguide layer to a side of the second waveguide layer away from the first waveguide layer.

9. The method for manufacturing an optical waveguide structure of claim 1, wherein the forming the grating layer on the side of the first waveguide layer away from the second waveguide layer comprises:
forming a grating material layer on the side of the first waveguide layer away from the second waveguide layer; and
treating, using a nanoimprint lithography process or an etching process, the grating material layer to obtain the grating layer.

10. The method for manufacturing an optical waveguide structure of any one of claims 1 to 9, further comprising:
forming an optical functional layer on a side of the grating layer away from the first waveguide layer.

11. An optical waveguide structure, comprising:
a first waveguide layer;
a second waveguide layer bonded to the first waveguide layer, the first waveguide layer having a refractive index greater than a refractive index of the second waveguide layer; and
a grating layer located on a side of the first waveguide layer away from the second waveguide layer.

12. The optical waveguide structure of claim 11, wherein the first waveguide layer and the second waveguide layer each comprises at least one of glass and resin.

13. The optical waveguide structure of claim 11, wherein the refractive index of the first waveguide layer ranges from 1.7 to 2.1, and the refractive index of the second waveguide layer ranges from 1.4 to 1.8.

14. The optical waveguide structure of claim 11, wherein the second waveguide layer has a thickness less than a thickness of the first waveguide layer.

15. The optical waveguide structure of claim 11, further comprising a bonding layer,
wherein the bonding layer is located between the first waveguide layer and the second waveguide layer, and the first waveguide structure is bonded to the second waveguide structure via the bonding layer.

16. The optical waveguide structure of claim 15, wherein the bonding layer comprises at least one of oxide of silicon and nitride of silicon.

17. The optical waveguide structure of claim 11, further comprising a third waveguide layer,
wherein the third waveguide layer is bonded to a side of the second waveguide layer away from the first waveguide layer, and the third waveguide layer has a refractive index less than the refractive index of the second waveguide layer.

18. The optical waveguide structure of any one of claims 11 to 17, further comprising an optical functional layer,
wherein the optical functional layer is located on a side of the grating layer away from the first waveguide layer.

19. A display device, comprising an optical waveguide structure of any one of claims 11 to 18.
